# EUROPEAN PATENT APPLICATION

(11) **EP 1 582 396 A1**
(43) Date of publication of application: **05.10.2005**
(21) Application number: 04425244.3
(22) Date of filing: 01.04.2004
(51) Int. Cl.: B60M 7/00, B60L 5/38

(54) **System for the electrical supply of vehicles in urban areas**

(71) Applicant: MARICO s.a.s di Dallara Riccardo & C., 44022 Lido di Pomposa (FE) (IT)
(72) Inventor: Dallara, Riccardo, 44100 Ferrara (IT)

(57) **Abstract**

The invention concerns a system for the electric power supply for vehicles, particularly suitable for urban traffic. The system is composed by a fixed part constituted by two conductive stripes, applied to the road surface for each direction, with the purpose of making the electric power supply available along the road, and by a mobile part that is mounted on the electric vehicle, constituted by an energy captation, capable of identifying the position of the underlying supply stripes and to automatically adapt its position so as to maintain the electric contact between the vehicle in movement and the fixed infrastructure. Finally, the system requires that the vehicle is equipped with batteries, allowing the freedom of moving away from the power supply stripes.

## Description

This invention concerns an electric power supply system for vehicles, particularly applicable to the vehicular traffic in the urban ambit. The invention thus faces the energy problem for the running of the vehicles in the urban ambit, and the consequent problem of pollution. The aim of the invented system is to overcome the defects and the drawbacks of the already existing electricity fed transport systems, and to allow an easy diffusion of the power supply of the vehicles, particularly in the urban ambit. Some examples of vehicles that currently run by means of electric power are: trains, tubes, trams, trolley buses, and buses with hybrid motor (both electrical and petrol engine). Each of these means of transport is characterized by one, or several, of the following elements:
- the presence of tracks to which the running of the vehicle is bound (for example trains, tubes and trams);
- the presence of power supply conductors, over-hanging the means of transport; (although it is not bound to rails, also a trolley-bus needs a system of overhead conductors, as its resource of electric power);
- or else, by the presence of batteries, which results in very limited autonomy and recharge problems, such as is the case with the hybrid motor-bus.

With this invention we want to overcome the limitations of the electric vehicle supply systems mentioned above.

Particularly, this system proposes the removal of tracks: instead of bounding the vehicle to an obliged route of tracks, it allows it to run along normal roads and to enjoy maximum freedom of movement. Obviously, eliminating rails means not only to increase the freedom of movement, but also to overcome problems of building, maintaining and managing railroads. Moreover, by eliminating the vibrations caused by rail-born transport, it is possible to obtain less acoustic pollution, as well as to decrease landscape pollution.

Besides track elimination, the invention proposes the elimination of the overhead power supply systems, which, taking into account the scenery and the aesthetic point of view, are a soar in the eye, and which also require installation and burdensome maintenance. Moreover, overhead fittings constitute a considerable constraint for the motion of the vehicle.

The system also aims to overcome the problems of autonomy and battery recharge, which at the moment are characteristic for battery fed electric motor vehicles.

Finally, the invention seeks to be applicable on any existing street type, without creating problems to the circulation of the other vehicles.

With the elimination of the rails, we presume that the invented system should be applied to electric motor vehicles that go on tyres. In this relation, the characteristic of the invented system consists in identifying the electrical supply modality of the vehicle, allowing it to obtain the following targets:
a) to eliminate the system of overhead conductors (for example the trolley-bus);
b) to avoid autonomy battery problems of the already existing electric wireless vehicles;
c) to avoid the use of rails, since they limit the freedom of movement of the vehicle, and may constitute an obstacle for the other vehicles;
d) to be easily applicable on any road currently used by vehicles that go on tyres;
e) to be easily applicable to any type of vehicle on tyres with electric engine.

From a logical point of view, the invented system can be separated into two fundamental parts:
- a fixed part, constituted by all those elements that are to be installed on the selected road; from hereon we will refer to this fixed part also as the INFRASTRUCTURE;
- a mobile part, constituted by all the elements that are to be installed on the vehicle.

The purpose of the fixed part is to make the electric power supply available along the way that is to be "electrified". The purpose of the mobile part, installed on the electric vehicle, is then to extract the energy provided by the fixed part, while the vehicle is moving.

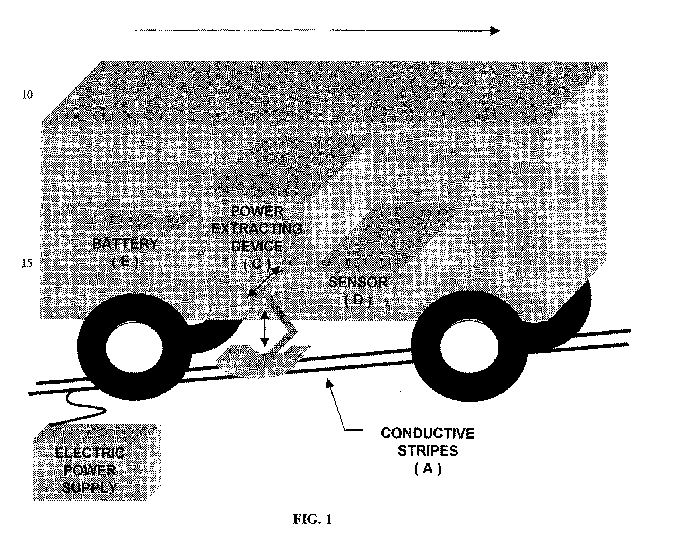

The fixed part (INFRASTRUCTURE) consists basically of an electric power supply track, taking the shape of two "conducting stripes " (fig.1 A.). The stripes are placed on the road surface, from which it is then possible to draw the electric energy required by of the vehicles.

Such a track, which we will call the SUPPLY TRACK, consists of two CONDUCTIVE STRIPES (fig.1 A) for each direction, and has the following characteristics:
- it is to be placed on the road surface in such a way that it should not be an obstacle for pedestrians and the circulation of other vehicles; meaning that the two conductive stripes (fig.1 A) will have to be put flat on the road surface;
- the supply track (fig.1 A) must not represent any danger from an electric point of view, why the tension of the conductive stripes (fig.1 A) has to be low, and in line with the safety requirements for potential direct contact with men and animals;
- the supply track (fig.1 A) has to be equipped with a protection system that interrupts the output of electric energy in case of short circuit, current overload or current dispersion; this function will be made/carried out by devices that feed the supply track and that we will call SUPPLYING GROUPS (fig.1 B); we will also see that a possible power supply block due to safety intervention will not cause any problems for the circulation of the concerned vehicles;
- the supply track (fig.1 A) must not constitute a constraint for the circulation of the vehicle that draws energy from the electrical supply; rather, the vehicle has to be free to circulate independently of the presence and the position of the supply track (fig.1 A). (However, we will look at this aspect when we analyze the mobile part of the invention.)

To sum up, the fixed part (INFRASTRUCTURE) of the invention has the purpose of providing electric energy along the road. It is fundamentally constituted by a SUPPLY TRACK made out of two CONDUCTIVE STRIPES (fig.1 A) for each direction, that are electrically fed by SUPPLYINGT GROUPS (fig.1 B), that are equipped with a safety device against overloads, short circuits and dispersions.

The mobile part of the invention is installed on the electric vehicle, and has the precise purpose of allowing the vehicle to extract electric energy from the fixed part provider (INFRASTRUCTURE), while still in movement.

The already existing captation systems are constituted by for example pantographs, such as is the case when the electric power supply takes the shape of overhead conductors; or, when the power supply originates from conductors, by brushes that slide on conductive bars set under or on the side of the vehicle (for example certain subways). In both cases, we find a mechanical tie between the vehicle and the electrified line and such tie greatly reduces the freedom of movement for the vehicle.

Our invention intends to eliminate this mechanical tie and make the vehicle move freely along its way.

In order to eliminate every mechanical constraint, a fundamental element of the mobile part of the invention is represented by an intelligent electric power captation device, able to autonomously intercept the supply track by individualising its position and its presence on the road surface under the vehicle. The captation device that characterises the invention can be divided into two parts:
- the first part, which we will call it CAPTATION ACTIVATOR (fig.1 C) makes the real electric captation. This activator is entirely analogous to the existing systems, and can for example be constituted by two brushes moving over the conductive stripe (fig.1 A) of the supply track, thus creating electric contact between the moving vehicle and the electrified infrastructure. However, unlike the systems currently in use, the CAPTATION ACTIVATOR (fig.1 C) of the present invention is capable of sensing the underlying conductive stripes and of adapting its position so as to fit the stripes, thus allowing the vehicle freedom of movement;
- the second part is able to identify the presence and the position of the supply track of the vehicle, and commands the movements of the CAPTATION ACTIVATOR described above. We will call this second part CAPTATION SENSOR (fig.1 D), as to illustrate that it is able to recognize the presence and the position of the supply track (fig.1 A) and to execute the power captation by sending the CAPTATION ACTIVATOR at the right moment (fig.1 C).

In practice, the CAPTATION SENSOR (fig.1 D) registers the possible presence of the SUPPLY TRACK (fig.1 A) underlying the vehicle. If the presence of the supply track is registered, the captation sensor is also able to identify the position of the CONDUCTIVE STRIPES (fig.1 A) in relation to the vehicle and then to order the positioning of the CAPTATION ACTIVATOR (fig.1 C), so that this can intercept the underlying conductive stripes and pair off with them (fig.1 A). If the sensor of captation (fig.1 D) does not register the presence of the supply track (fig.1 A), or it registers a position of the conductive stripes (fig.1 A) not interceptible by the captation activator (fig.1 C), the captation sensor (fig.1 D) will command the captation activator (fig.1 C) to rest in stand by position.

The captation sensor (fig.1 D) and the captation activator (fig.1 C) allow the vehicle to move freely without being bound to the supply track (fig.1 A). In fact, if the position of the supply track relative to the vehicle changes during the free movement of the vehicle, the captation sensor (fig.1 D) will register the shift of the supply track (fig.1 A) in relation to the vehicle, and then adapt the position of the captation activator (fig.1 C), in order to maintain the electric contact between the vehicle in movement and the supply track (fig.1 A). In other words, the captation activator (fig.1 C) will follow the position of the supply track (fig.1 A) in accordance to the indications given by captation sensor (fig.1 D).

The previous mechanism can work only if the supply track (fig.1 A) is set under the captation sensor (fig.1 D) and if it is reachable by the captation activator (fig.1 C). If it can not be verified by this condition, the captation sensor (fig.1 D) will command the captation activator (fig.1 C) to stand by position.

In order to provide the vehicle maximum freedom of movement, and thus allowing it to move away completely from the supply track, it is necessary to equip the vehicle with BATTERIES (fig.1 E). These can then substitute at possible interruptions of the electric connection between the vehicle and the supply track (fig.1 A), and temporarily provide electric energy for the movement of the vehicle.

As soon as the vehicle returns to the supply track area (fig.1 A), the captation sensor of the vehicle (fig.1 D) will be able to identify the conductive stripes of the supply track (fig.1 A) and to operate the captation activator (fig.1 C) so as to restore the electric contact between the vehicle and the supply track (fig.1 A). Once the contact is restored, the electric energy coming from the supply track (fig.1 A) will allow the operating of the motor of the vehicle and also the recharge of the batteries (fig.1 E), which are placed on the vehicle itself.

Finally, if we suppose that the vehicle travels for most of the time on a road provided with a power supply track (fig.1 A), we can assume that the batteries (fig.1 E) are also in a state of recharge for the most of the time, and that they, in the brief distances in which the vehicle moves away from the supply track (for example during an overtaking or passing cross-roads), intervene and provide the motor electricity. The conduct of the electric contact between the vehicle and the supply track of supply (fig.1 A), including the occasional switching to batteries in case of separation, (fig.1 E) functions entirely automatically with respect to the driver of the vehicle. The driver should drive his vehicle normally and without worrying about any constraints resulting from the supply modalities of the vehicle.

To summarize and to list all the elements that compose the invented system, we could say that it is constituted by one fixed part called Infrastructure and a mobile part to be mounted on the vehicle. The fixed part is constituted by SUPPLY TRACKS (fig.1 A) that are electrically fed by opportune devices called SUPPLYING GROUPS (fig.1 B). Every supply track is constituted by CONDUCTOR STRIPES (fig.1 A) which are placed on the road surface and which make the electric energy available to the vehicles running along the electrified path. The mobile part of the invented system is installed on the vehicle, and is constituted by a CAPTATION SENSOR (fig.1 D) which is able to identify the position of the potential supply track (fig.1 A) underlying the vehicle. Such captation sensor (fig.1 D) sends orders to a CAPTATION ACTIVATOR (fig.1 C) (situated on the vehicle), to intercept, to follow and therefore to create the electric contact between the conductor stripes of the supply track (fig.1 A) and the moving vehicle. In order to allow the vehicle to move away from the supply track (fig.1 A), and to permit it an electric power supply also when it is not in contact with the conductive stripes (fig.1 A), the vehicle will be equipped with BATTERIES (fig.1 E) capable of intervening automatically when the vehicle moves away from the supply track (fig.1 A), but which will be recharged as soon as the contact between the vehicle and the track is restored.

The invented system is particularly suitable for means of transport that always maintain the same routes in the urban ambit, as for example buses. This fact alone should be sufficient to ascertain an easy spread of the system. Once the infrastructure is created, justified exactly because of the need of public transport using electric power supply, the use of the system could be easily extended to include private cars. This would mean a great increase of electric power supplied vehicles circulating at urban level, with considerable repercussions to the problem of pollution.

The described system offers the following advantages:
- it can be applied to any electric motor vehicle on tyres;
- it does not hinder the freedom of movement of the vehicle;
- it can be installed on any road;
- it does not impede the circulation of other vehicles;
- it overcomes the problem of battery autonomy: since the vehicle is fed by the supply track for most of the time (fig.1 A), the batteries (fig.1 E) are almost always recharging;
- in comparison to the existing systems it offers low installation and maintenance costs of the infrastructure;
- it presents no problems at crossroads: thanks to the autonomy of movement which the vehicle is guaranteed by the batteries (fig.1 E), one can avoid putting the supply tracks (fig.1 A) at crossroads;
- it causes no problems in case of brief interruptions of the electric energy supply from the infrastructure, since the batteries (fig.1 E) mounted on the vehicle are able to substitute the power provision at such occasions;

In conclusion, the invention represents a power supply alternative for electric vehicles, with considerable advantages in comparison to the already existing systems.

## Claims

1. System for the electric power supply for vehicles, **characterized by** a fixed part constituted by two conductive stripes for every sense of direction, applied to the road surface, with the purpose of making the electric power supply available along the road; and by a mobile part to be mounted on the electric vehicle, constituted by an energy captation system, which is capable to identify the position of the underlying supply stripes and to automatically adapt their position so as to maintain the electric contact between the moving vehicle and the conductive stripes fixed on the road surface; as well as by a system of batteries mounted on the vehicle, allowing it (the vehicle) power supply autonomy and thus the freedom to move away from the conductive stripes.

2. System for the electric power supply for vehicles as described under claim 1) **characterized by** the fact that the conductive stripes, applied to the road surface to make the electric energy available to the running vehicles, do not constitute an obstacle to the free circulation of other vehicles or to pedestrians from the electric point of view do not constitute a danger in case of direct contact with people or animals.

3. System for the electric power supply for vehicles as described under claim 1) **characterized by** the fact that the conductive stripes applied to the road surface to make the electric energy available to the running vehicles, are equipped with protective devices against overloads, short-circuits and possible dispersions

4. System for the electric power supply for vehicles as described under claim 1) **characterized by** the fact of being provided, for the vehicles in movement, with an electric energy captation capable of identifying the position of the electrified infrastructure, and to automatically adapt its position so as to maintain and maximise the electric contact the more as possible.

5. System for the electric power supply of vehicles as described under claim 1) **characterized by** the fact of providing vehicles in movement with a system with a system which is able to automatically register the presence or the absence of the infrastructure, electrified for the power supply of the vehicle and consequently to be able to activate or to deactivate the power captation devices, depending on the presence or absence of the infrastructure electrified for the supply of the vehicle.

6. System for the electric power supply for vehicles as described under claim 1) **characterized by** the fact of providing vehicles in movement with a system which is able to automatically register the position of the infrastructure electrified for the power supply of the vehicle and consequently to be able to automatically adapt the position of the the power captation devices, depending on the position of the infrastructure electrified for the supply of the vehicle, in order to automatically mantain the electric contact between the moving vehicle and the fixed infrastructure.

7. System for the electric power supply for vehicles as described in the claim 1) **characterized by** the fact to be able to automatically maintain the electric contact between the moving vehicle and the electrified infrastructure without causing mechanical constraints between the two parts.

8. System for the electric power supply for vehicles as described under claim 1) **characterized by** the fact of allowing the vehicle maximum freedom of movement, thanks to the automatic system of captation from the infrastructure described under claims 5) 6) 7) and by the presence of batteries on the vehicle, allowing the vehicle the possibility to move away from the electrified infrastructure.
